(19) **Europäisches Patentamt**

**European Patent Office**

**Office européen des brevets**

(11) **EP 0 993 247 B1**

(12) **EUROPEAN PATENT SPECIFICATION**

(45) Date of publication and mention
of the grant of the patent:
**29.01.2003 Bulletin 2003/05**

(51) Int Cl.[7]: **A01N 43/653**
// (A01N43/653, 43:36, 43:30),
A01N43:54

(21) Application number: **98937481.4**

(22) Date of filing: **12.06.1998**

(86) International application number:
**PCT/EP98/03571**

(87) International publication number:
**WO 98/057543 (23.12.1998 Gazette 1998/51)**

(54) **PESTICIDAL COMPOSITIONS**

PESTIZIDE ZUSAMMENSETZUNGEN

COMPOSITIONS PESTICIDES

(84) Designated Contracting States:
**AT BE CH CY DE DK ES FI FR GB GR IE IT LI LU
MC NL PT SE**
Designated Extension States:
**LT LV MK RO SI**

(30) Priority: **16.06.1997 GB 9712466
16.06.1997 GB 9712463**

(43) Date of publication of application:
**19.04.2000 Bulletin 2000/16**

(73) Proprietor: **Syngenta Participations AG
4058 Basel (CH)**

(72) Inventors:
- **MÜLLER, Kaspar
  CH-4124 Schönenbuch (CH)**
- **KNAUF-BEITER, Gertrude
  D-79379 Müllheim (DE)**
- **STECK, Bernhard
  CH-3286 Muntelier (CH)**

(56) References cited:
| | |
|---|---|
| EP-A1- 0 467 792 | EP-A1- 0 487 451 |
| EP-A1- 0 513 567 | EP-A1- 0 548 025 |
| EP-A1- 0 575 838 | EP-A2- 0 630 569 |
| GB-A- 2 308 301 | |

EP 0 993 247 B1

**Description**

The present invention relates to fungicldal mixtures having synergistically enhanced action and to methods of using such mixtures in crop protection, especially in the control and prevention of disease infestation on seed.

EP-A-487451 describes synergistic mixtures of fludioxonil and a triazole active agent which is tebuconazole.

EP-A-513562 describes synergistic mixtures containing fludioxonil and triazole fungicides.

EP-A-575838 describes granular compositions having particular carrier components, and which contain an active ingredient or association of active ingredients, including fludioxonil and triticonazole. However, no mention is made of a particular combination of these substances, or of any expected synergistic effect which might result therefrom.

EP-A-467792 describes mixtures of triticonazole and other fungicides such as pyrroles.

EP-A-630569 describes synergistic mixtures of a component (II) which is 4-cyclopropyl-6-methyl-N-phenyl-2-pyrimidineamine and a component (I) chosen from several possibilities including fludioxonil.

EP-A-548025 describes synergistic mixtures of a component (II) which is 4-cyclopropyl-6-methyl-N-phenyl-2-pyrimidineamine and a component (I) which is chosen from triazole fungicides including cyproconazole.

The mixtures according to the invention comprise at least two fungicidally active components together with a suitable carrier material, wherein component I is

    I) fludioxonil (= 4-(2,2-difluoro-1,3-benzodioxol-4-yl)pyrrole-3-carbonitrile) (The Pesticide Manual, 10th. edition, 1994, 326);
    and wherein component II is
    IIA) triticonazole (= 5-[(4-chlorophenyl)methylene]-2,2-dimethyl-1-(1H-1,2,4-triazol-1--ylmethyl)cyclopentanol) (The Pesticide Manual, 10th, edition, 1994, 712) or
    IIB) cyproconazole (= $\alpha$-(4-chlorophenyl)-$\alpha$-(1-cyclopropylethyl)-1-H-1,2,4-triazol-1-ethanol) (The Pesticide Manual, 10th. edition, 1994, 183).

The active ingredient mixtures I+II according to the invention have very advantageous properties for protecting plants against disease infestation, especially in the control and prevention of disease infestation on seed. The synergistically enhanced action of mixtures of components I and II manifests itself, for example, in lower disease infestation, lower rates of application, a longer duration of action and altogether higher crop yields. Such enhancements were not to be expected from the sum of the actions of the individual components.

The weight ratio is selected as to give a synergistic action. In general, the weight ratio I:II is from 100:1 to 1:100. Advantageous mixing ratios of the two active ingredients are I:IIA = 1:20 to 10:1, preferably 1:15 to 1:1, most preferably 1:10 to 1:2.
I:IIB = 1:10 to 20:1, preferably 1:5 to 10:1, most preferably 1:1 to 5:1.

The above mentioned mixtures may be mixed with other pesticides, preferably fungicides as for example cyprodinil. Pariculary preferred is the 3-component mixture comprising

    I) fludioxonil,
    IIB) cyproconazole and
    III) cyprodinil (= 4-cyclopropyl-6-methyl-N-phenyl-2-pyrimidinamin (The Pesticide Manual, 10th. edition, 1994, 109). In this case advantageous mixing ratios are
    I:IIB:III= 1:10:40 to 20:1:10, preferably 1:5:20 to 10:1:10, most preferably 1:1:4 to 5:1:10.

Further advatageous synergistic mixtures are triticonazole + cyprodinil, cyproconazole + R-metalaxyl, and fludioxonil + R-metalaxyl + flutriafol.

The active ingredient mixtures in question can be used to inhibit or destroy the microorganisms which occur on plants or on parts of plants (the fruit, blossom, leaves, stems, tubers or roots) of different crops of useful plants, while at the same time parts of plants that grow later are also protected against such microorganisms. They can also be used as dressings in the treatment of plant propagation material, especially seed (fruit, tubers, grains) and plant cuttings (e.g. rice), to provide protection against fungus infections as well as against phytopathogenic fungi which occur in the soil.The active ingredient mixtures according to the invention are distinguished by the fact that they are especially well tolerated by plants and are environmentally friendly.

The active ingredient mixtures are effective against phytopathogenic fungi belonging to the following classes: Ascomycetes (e.g. Venturia, Podosphaera, Erysiphe, Monilinia, Mycosphaerella, Uncinula); Basidiomycetes (e.g. the genus Hemileia, Rhizoctonia, Puccinia); Fungi imperfecti (e.g. Botrytis, Helminthosporium, Rhynchosporium, Fusarium, Septoria, Cercospora, Alternaria, Pyricularia and Pseudocercosporella herpotrichoides); Oomycetes (e.g. Phytophthora, Peronospora, Bremia, Pythium, Plasmopara).

Target crops for the areas of indication disclosed herein comprise within the scope of this invention e.g. the following species of plants: cereals (wheat, barley, rye, oats, rice, sorghum and related crops); beet (sugar beet and fodder beet); pomes, stone fruit and soft fruit (apples, pears, plums, peaches, almonds, cherries, strawberries, raspberries and blackberries); leguminous plants (beans, lentils, peas, soybeans); oil plants (rape, mustard, poppy, olives, sunflowers, coconut, castor oil plants, cocoa beans, groundnuts); cucumber plants (marrows, cucumbers, melons); fibre plants (cotton, flax, hemp, jute); citrus fruit (oranges, lemons, grapefruit, mandarins); vegetables (spinach, lettuce, asparagus, cabbages, carrots, onions, tomatoes, potatoes, paprika); lauraceae (avocados, cinnamon, camphor); or plants such as maize, tobacco, nuts, coffee, sugar cane, tea, vines, hops, bananas and natural rubber plants, as well as ornamentals (flowers, shrubs, broad-leaved trees and evergreens, such as conifers). This list does not represent any limitation.

The active ingredient mixtures according to the invention are especially advantageous for seed treatment of cereals (wheat, barley, rye, oats, rice, sorghum and related crops), in particular seed of wheat and barley.

The mixtures of compounds of formulae I and II are normally used in the form of compositions. The compounds of formulae I and II can be applied to the area or plant to be treated either simultaneously or in succession on the same day, if desired together with further carriers, surfactants or other application-promoting adjuvants customarily employed In formulation technology.

Suitable carriers and adjuvants can be solid or liquid and are the substances ordinarily employed in formulation technology, e.g. natural or regenerated mineral substances, solvents, dispersants, wetting agents, tackifiers, thickeners, binders or fertilisers.

A method of applying an active ingredient mixture comprising at least one of each of the active ingredients I and II is application to the parts of the plants that are above the soil, especially to the leaves (foliar application). The frequency and rate of application depend upon the biological and climatic living conditions of the pathogen. The active ingre dients can, however, also penetrate the plant through the roots *via* the soil or *via* the water (systemic action) if the locus of the plant is impregnated with a liquid formulation (e.g. in rice culture) or if the substances are introduced in solid form into the soil, e.g. in the form of granules (soil application). In order to treat seed, the compounds of formulae I and II can also be applied to the seeds (coating), either by impregnating the tubers or grains with a liquid formulation of each of the active ingredients in succession, or by coating them with an already combined wet or dry formulation. In addition, in special cases, other methods of application to plants are possible, for example treatment directed at the buds or the fruit trusses.

The compounds of the combination are used in unmodified form or, preferably, together with the adjuvants conventionally employed in formulation technology, and are therefore formulated in known manner e.g. into emulsifiable concentrates, coatable pastes, directly sprayable or dilutable solutions, dilute emulsions, wettable powders, soluble powders, dusts, granules, or by encapsulation in e.g. polymer substances. As with the nature of the compositions, the methods of application, such as spraying, atomising, dusting, scattering, coating or pouring, are chosen in accordance with the intended objectives and the prevailing circumstances. Advantageous rates of application of the active ingredient mixture are generally from 50 g to 2 kg a.i./ha, especially from 100 g to 1000 g a.i./ha, more especially from 250 g to 700 g a.i./ha. In the case of the treatment of seed, the rates of application are from 0.5 g to 500 g, preferably from 1 g to 100 g, most preferably from 5 g to 50 g a.i. per 100 kg of seed.

The formulations are prepared in known manner, e.g. by homogeneously mixing and/or grinding the active ingredients with extenders, e.g. solvents, solid carriers and, where appropriate, surface-active compounds (surfactants).

Suitable solvents are: aromatic hydrocarbons, preferably the fractions containing 8 to 12 carbon atoms, e.g. xylene mixtures or substituted naphthalenes, phthalates, such as dibutyl phthalate or dioctyl phthalate, aliphatic hydrocarbons, such as cyclohexane or paraffins, alcohols and glycols and their ethers and esters, such as ethanol, ethylene glycol, ethylene glycol monomethyl or monoethyl ether, ketones, such as cyclohexanone, strongly polar solvents, such as N-methyl-2-pyrrolidone, dimethyl sulfoxide or dimethylformamide, as well as vegetable oils or epoxidised vegetable oils, such as epoxidised coconut oil or soybean oil; or water.

The solid carriers used, e.g. for dusts and dispersible powders, are normally natural mineral fillers, such as calcite, talcum, kaolin, montmorillonite or attapulgite. In order to improve the physical properties it is also possible to add highly dispersed silicic acid or highly dispersed absorbent polymers. Suitable granulated adsorptive carriers are porous types, for example pumice, broken brick, sepiolite or bentonite, and suitable nonsorbent carriers are, for example, calcite or sand. In addition, a great number of pregranulated materials of inorganic or organic nature can be used, e.g. especially dolomite or pulverised plant residues.

Depending upon the nature of the compounds of formulae I and It to be formulated, suitable surface-active compounds are non-ionic, cationic and/or anionic surfactants having good emulsifying, dispersing and wetting properties. The term "surfactants" will also be understood as comprising mixtures of surfactants.

Particularly advantageous application-promoting adjuvants are also natural or synthetic phospholipids of the cephalin and lecithin series, e.g. phosphatidylethanolamine, phosphatidylserine, phosphatidylglycerol and lysolecithin.

The agrochemical compositions normally comprise 0.1 to 99 %, especially 0.1 to 95 %, compounds of formulae I and II, 99.9 to 1 %, especially 99.9 to 5 %, of a solid or liquid adjuvant and 0 to 25 %, especially 0.1 to 25 %, of a surfactant.

Whereas commercial products will preferably be formulated as concentrates, the end user will normally employ dilute formulations.

The Examples which follow serve to illustrate the invention, "active ingredient" denoting a mixture of compound I and compound II in a specific mixing ratio.

| Formulation Examples | | | |
|---|---|---|---|
| Wettable powders | a) | b) | c) |
| active ingredient [I:II = 1:3(a), 1:2(b), 1:1 (c)] | 25 % | 50 % | 75 % |
| sodium lignosulfonate | 5 % | 5 % | |
| sodium lauryl sulfate | 3 % | - | 5 % |
| sodium diisobutylnaphthalenesulfonate | - | 6 % | 10 % |
| phenol polyethylene glycol ether (7-8 mol of ethylene oxide) | - | 2 % | - |
| highly dispersed silicic acid | 5 % | 10 % | 10 % |
| kaolin | 62 % | 27 % | - |

The active ingredient is thoroughly mixed with the adjuvants and the mixture is thoroughly ground in a suitable mill, affording wettable powders which can be diluted with water to give suspensions of the desired concentration.

| Dusts | a) | b) | c) |
|---|---|---|---|
| active ingredient [I:II = 1:6(a), 1:2(b), 1:10(c)] | 5 % | 6 % | 4 % |
| talcum | 95 % | - | - |
| kaolin | - | 94 % | - |
| mineral filler | - | - | 96 % |

Ready-for-use dusts are obtained by mixing the active ingredient with the carrier and grinding the mixture in a suitable mill. Such powders can also be used for dry dressings for seed.

| Coated granules | |
|---|---|
| active ingredient (I:II = 1:10) | 8 % |
| polyethylene glycol (mol. wt. 200) | 3 % |
| kaolin | 89 % |

The finely ground active ingredient is uniformly applied, in a mixer, to the kaolin moistened with polyethylene glycol. Non-dusty coated granules are obtained in this manner.

| Suspension concentrate | |
|---|---|
| active ingredient (I:II = 1:8) | 40 % |
| propylene glycol | 10 % |
| nonylphenol polyethylene glycol ether (15 mol of ethylene oxide) | 6 % |
| sodium lignosulfonate | 10 % |
| carboxymethylcellulose | 1 % |
| silicone oil (in the form of a 75 % emulsion in water) | 1 % |
| water | 32 % |

The finely ground active ingredient is intimately mixed with the adjuvants, giving a suspension concentrate from which suspensions of any desired dilution can be obtained by dilution with water. Using such dilutions, living plants as well as plant propagation material can be treated and protected against infestation by microorganisms, by spraying, pouring or immersion.

Biological Examples

A synergistic effect exists whenever the action of an active ingredient combination is greater than the sum of the actions of the individual components.

The action to be expected E for a given active ingredient combination obeys the so-called COLBY formula and can be calculated as follows (COLBY, S.R. "Calculating synergistic and antagonistic responses of herbicide combination". Weeds, Vol. 15, pages 20-22; 1967):

ppm = milligrams of active ingredient (= a.i.) per litre of spray mixture

X = % action by active ingredient I using p ppm of active ingredient

Y = % action by active ingredient II using q ppm of active ingredient.

According to Colby, the expected (additive) action of active ingredients I+II using p+q ppm of active ingredient is $E = X + Y - \dfrac{X \cdot Y}{100}$

If the action actually observed (O) is greater than the expected action (E), then the action of the combination Is superadditive, i.e. there is a synergistic effect.

Example B-1: Action against Drechslera teres on barley

10-day-old barley plants of the "Golden Promise" variety are sprayed with a spray mixture of the active ingredient mixture. The treated plants are infected 24 hours later with a conidia suspension of the fungus and incubated in a climatic chamber at 70 % relative humidity and 20-22°C. Fungus infestation is evaluated 5 days after infection. The mixtures according to the invention exhibit good synergistic actions.

Example B-2: Action against Helminthosporium gramineum on barley; seed treatment

Barley seeds are contaminated with a spore suspension of the fungus and left to dry. The contaminated seeds are dressed with a suspension of the test substance. After two days, the seeds are placed on suitable agar dishes and, after a further four days, the development of the fungal colonies around the seeds is evaluated. The number and size of the fungal colonies are used to evaluate the test substance.

**Results**

component I: Fludioxonil
component IIA: Triticonazole

| Test no. | g a.i. per 100 kg seed | | I:II | % action | | SF |
|---|---|---|---|---|---|---|
| | a.i. I | a.i. IIA | | O (observed) | E (expected) | O/E |
| 1 | 0.5 | | | 23 | | |
| 2 | | 10 | | 5 | | |
| 3 | 0.5 | 10 | 1:20 | 41 | 27 | 1.5 |

Example B-3: Action against Fusarium nivale in rye: seed treatment

Rye seeds of the Tetrahell variety naturally infected with Fusarium nivale are dressed in a roller mixer with the test fungicides. The infected and treated rye is sown in October in the open with a seeder in plots 3 metres long and in 6 rows. Three replicates are carried out with each concentration. The test plants are cultivated under normal field conditions, harvested and dried.

Results

component I: Fludioxonil
component IIB: Cyproconazole

| Test no. | g a.i. per 100 kg seed | | I:II | dry weight of crop (O: observed; E: expected) | | | SF |
|---|---|---|---|---|---|---|---|
| | a.i. I | a.i. IIB | | O [kg] | % increase over check | | O/E |
| | | | | | O | E | |
| 0 (check) | - | - | | 767 | | | |
| 1 | 0.5 | | | 770 | 0 | | |
| 2 | | 1 | | 880 | 15 | | |
| 3 | 0.5 | 1 | 1:2 | 973 | 27 | 15 | 1.8 |

## Claims

1. A composition having synergistic action against disease infestation in plants, comprising at least two active ingredient components together with a suitable carrier, wherein component I is

   I) fludioxonil (= 4-(2,2-difluoro-1,3-benzodioxol-4-yl)pyrrole-3-carbonitrile) and wherein component II is
   IIA) triticonazole (= 5-[(4-chlorophenyl)methylene]-2,2-dimethyl-1-(1H-1,2,4-triazoi-1--ylmethyl)cyclopentanol) or
   IIB) cyproconazole (= $\alpha$-(4-chlorophenyl)-$\alpha$-(1-cyclopropylethyl)-1-H-1,2,4-triazol-1-ethanol).

2. A composition according to claim 1, wherein component II is IIA) triticonazole.

3. A composition according to claim 1, wherein component II is IIB) cyproconazole.

4. A composition according to claim 1, wherein the ratio by weight of I:IIA is 1:20 to 10:1.

5. A composition according to claim 1, wherein the ratio by weight of I:IIB is 1:10 to 20:1.

6. A composition according to claim 3, which additionally comprises III) cyprodinil.

7. A method of protecting plants against plant diseases by treating the plants, parts of plants or their surroundings with a component I and a component II according to claim 1, in any desired sequence or simultaneously.

8. A method according to claim 7, wherein seed is treated.

9. A method according to claim 8, wherein seed of cereals is treated.

10. Seed that has been treated in accordance with claim 8.


## Patentansprüche

1. Zusammensetzung mit synergistischer Wirkung gegen Krankheitsbefall von Pflanzen, umfassend zumindest zwei Wirkstoffkomponenten zusammen mit einem geeigneten Träger, wobei Komponente I

   I) Fludioxonil (= 4-(2,2-Difluor-1,3-benzodioxol-4-yl)pyrrol-3-carbonitril) ist und wobei Komponente II
   II A) Triticonazol (= 5-[(4-Chlorphenyl)methylen]-2,2-dimethyl-1-(1H-1,2,4-triazol-1-yl-methyl)cyclopentanol) oder
   II B) Cyproconazol (=$\alpha$-(4-Chlorphenyl)-$\alpha$-(1-cyclopropylethyl)-1H-1,2,4-triazol-1-ethanol) ist.

2. Zusammensetzung nach Anspruch 1, wobei Komponente II IIA) Triticonazol ist.

3. Zusammensetzung nach Anspruch 1, wobei Komponente II IIB) Cyproconazol ist.

4. Zusammensetzung nach Anspruch 1, wobei das Gewichtsverhältnis von I : IIA 1 : 20 bis 10 : 1 beträgt.

**5.** Zusammensetzung nach Anspruch 1, wobei das Gewichtsverhältnis von I : IIB 1 : 10 bis 20 : 1 beträgt.

**6.** Zusammensetzung nach Anspruch 3, die zusätzlich III), Cyprodinil, umfaßt.

**7.** Verfahren zum Schutz von Pflanzen gegen Pflanzenkrankheiten durch die Behandlung der Pflanzen, Teilen von Pflanzen oder deren Umgebung mit einer Komponente I und einer Komponente II nach Anspruch 1 in jeder gewünschten Reihenfolge oder gleichzeitig.

**8.** Verfahren nach Anspruch 7, wobei Samen behandelt wird.

**9.** Verfahren nach Anspruch 8, wobei Samen von Getreide behandelt wird.

**10.** Samen der gemäß Anspruch 8 behandelt worden ist.


**Revendications**

**1.** Composition ayant un effet synergique contre l'infestation des plantes par les maladies, comprenant au moins deux composants d'ingrédients actifs conjointement à un véhicule approprié, dans laquelle le composant I est

I) le fludioxonile (= 4-(2,2-difluoro-1,3-benzodioxol-4-yl)pyrrole-3-carbonitrile)
et dans laquelle le composant II est
IIA) le triticonazole (= 5-[(4-chlorophényl)méthylène]-2,2-diméthyl-1-(1H-1,2,4-triazol-1-ylméthyl)cyclopentanol), ou
IIB) le cyproconazole (= $\alpha$-(4-chlorophényl)-$\alpha$-(1-cyclopropyléthyl)-1-H-1,2,4-triazol-1-éthanol).

**2.** Composition selon la revendication 1, dans laquelle le composant II est IIA) le triticonazole.

**3.** Composition selon la revendication 1, dans laquelle le composant II est IIB) le cyproconazole.

**4.** Composition selon la revendication 1, dans laquelle le rapport en poids de I:IIA est compris entre 1:20 et 10:1.

**5.** Composition selon la revendication 1, dans laquelle le rapport en poids de I:IIB est compris entre 1:10 et 20:1.

**6.** Composition selon la revendication 3, qui comprend en plus III) le cyprodinile.

**7.** Procédé de protection des plantes contre les maladies des plantes en traitant les plantes, des parties de plantes ou leur environnement à l'aide d'un composant I et d'un composant II selon la revendication 1, dans tout ordre souhaité ou de façon simultanée.

**8.** Procédé selon la revendication 7, dans lequel on traite des semences.

**9.** Procédé selon la revendication 8, dans lequel on traite des semences de céréales.

**10.** Semence que l'on a traitée selon la revendication 8.